Europäisches Patentamt

European Patent Office

Office européen des brevets

(11) Veröffentlichungsnummer: **0 005 730**

**A1**

(12) **EUROPÄISCHE PATENTANMELDUNG**

(21) Anmeldenummer: **79101273.5**

(22) Anmeldetag: **27.04.79**

(51) Int. Cl.²: **B 60 K 5/12**
**F 16 F 15/04**

(30) Priorität: **31.05.78 DE 2823720**

(43) Veröffentlichungstag der Anmeldung:
**12.12.79 Patentblatt 79/25**

(84) Benannte Vertragsstaaten:
**BE FR GB IT NL SE**

(71) Anmelder: **Boge GmbH**
**Bogestrasse 50**
**D-5208 Eitorf/Sieg()**

(72) Erfinder: **Hamaekers, Arno, Dipl.-Ing.**
**Schillerstrasse 37**
**D-5483 Ahrweiler(DE)**

(72) Erfinder: **Brenner, Heinz, Ing.Grad.**
**Im Plänzert 11**
**D-5483 Ahrweiler(DE)**

(54) Gummielastisches Motorlager mit hydraulischer Dämpfung, insbesondere für Kraftfahrzeuge.

(57) Bei einem Zweikammer-Motorlager mit hydraulischer Dämpfung, insbesondere für Kraftfahrzeuge, dessen flüssigkeitsgefüllte, hydraulisch über eine Drosselöffnung (12) miteinander verbundene Kammern (13, 14) aus einer gemeinsamen, an ein metallisches Widerlager (3) angeschlossenen Trennwand (18), je einer gummielastischen Umfangswand (6, 7) und starr miteinander verbundenen metallischen Stirnwänden (4, 5) bestehen, ist die gummielastische Umfangswand (6 bzw. 7) mindestens einer Kammer (13 bzw. 14), insbesondere der Hauptkammer (13), als Schubfeder in Form eines Kegelstumpf-Hohlkörpers ausgebildet.

Zwecks Verringerung des Platzbedarfs des Motorlagers bei gleichbleibend guter Pump- und Dämpfungswirkung ist die als Schubfeder ausgebildete gummielastische Umfangswand (6) in zwei in axialer Richtung übereinander angeordnete Teilschubkörper (15, 16) unterteilt, welche im Querschnitt im wesentlichen viereckig und in einem Winkel zueinander angeordnet sind, und welche im Bereich des Winkels miteinander einstückig verbunden sind, wobei der eine Teilschubkörper (15) mit einer Kegelmantelfläche (19) der metallischen Stirnwand (4) und der andere Teilschubkörper (16) mit einer Kegelmantelfläche (20) des Widerlagers (3) verbunden ist.

Fig. 1

- 1 -

<u>Gummielastisches Motorlager mit hydraulischer Dämpfung,</u>
<u>insbesondere für Kraftfahrzeuge</u>

Die Erfindung betrifft ein Zweikammer-Motorlager mit hydraulischer Dämpfung, insbesondere für Kraftfahrzeuge, dessen flüssigkeitsgefüllte, hydraulisch über eine Drosselöffnung miteinander verbundene Kammern aus einer gemeinsamen, an ein metallisches Widerlager angeschlossenen Trennwand, je einer gummielastischen Umfangswand und starr miteinander verbundenen metallischen Stirnwänden bestehen, wobei die gummielastische Umfangswand mindestens einer Kammer, insbesondere der Hauptkammer, als Schubfeder in Form eines Kegelstumpf-Hohlkörpers ausgebildet ist.

Derartige gummielastische Motorlager mit hydraulischer Dämpfung sind bekannt und dienen in der Anwendung an Kraftfahrzeugen dazu, Schwingungen des Motorgehäuses mit vorbestimmter Federkennung gedämpft auf das Fahrzeugfahrgestell zu übertragen. Nachteilig ist dabei, daß

./2

durch die Ausbildung der gummielastischen Umfangswand als Schubkörper eine sehr breitbauende Form des Motorlagers, nämlich ein Kegelstumpf-Hohlkörper mit schräg verlaufenden Kreisflächen, sich ergibt. Dies gilt sowohl dann, wenn die Spitze des Kegelstumpfes nach innen, als auch wenn sie nach außen gerichtet ist. Mit der Formgebung ist eine große hydraulisch wirksame Querschnittfläche der Kammer, insbesondere der Hauptkammer, im Vergleich zur wirksamen Querschnittsfläche der Drosselöffnung verbunden, so daß Belastungsfälle des Lagers auftreten können, die eine große Ventilbeschleunigung mit sich bringen. Dies führt zu einer Verhärtung der Federung. Erwünscht ist jedoch eine möglichst weiche Federrate, die auch dann beibehalten wird, wenn das Lager mit Schwingungen hoher Frequenz belastet wird.

Durch die an den bekannten derartigen Zweikammer-Motorlagern festgestellte dynamische Verhärtung wird auch das Geräuschverhalten beeinträchtigt. Bei hohen Frequenzen findet eine Geräuschübertragung auf das Fahrgestell statt.

Der Erfindung liegt die Aufgabe zugrunde, ein Zweikammer-Motorlager der eingangs genannten Art derart zu verbessern, daß der Platzbedarf des Lagers verringert wird und gegen hydraulischen Druck wenig nachgiebig, das Ausbeulen verhindernde, Gummiwände zur Erzielung einer großen Dämpfwirkung bei großer Amplitude und niedriger Frequenz geschaffen werden, sowie eine weiche Federrate mit einer geringen dynamischen Verhärtung und Geräuschübertragung bei hohen Frequenzen erzielt wird.

- 3 -

Die Aufgabe ist erfindungsgemäß dadurch gelöst, daß die als Schubfeder ausgebildete gummielastische Umfangswand in zwei in axialer Richtung übereinander angeordnete Teilschubkörper unterteilt ist, welche im Querschnitt im wesentlichen jeweils viereckig und in einem Winkel zueinander angeordnet sind, und welche im Bereich des Winkels miteinander einstückig verbunden sind, wobei der eine Teilschubkörper mit einer Kegelmantelfläche der metallischen Stirnwand und der andere Teilschubkörper mit einer Kegelmantelfläche des Widerlagers verbunden ist. Durch diese Aufteilung des Schubkörpers wird ein sehr kleiner Außendurchmesser des Lagers bei gleichbleibend guter Pumpwirkung und gleichbleibend guten Dämpfungskräften erzielt, da ein Aufblähen der gummielastischen Umfangswände aufgrund der erfindungsgemäßen Anordnung und Unterteilung des Schubkörpers gering ist. Während eine zur Erzielung einer weichen Federrate erforderliche Länge eines einteiligen Gummischubkörpers dem hydraulischen Druck wenig Widerstand entgegensetzen kann, ist ein unterteilter Gummischubkörper mit zwei Teilkörpern geringer radialer Länge hydraulisch stabil, das ergibt gute Pumpwirkung und große Dämpfungswerte.

Die Gefahr des Aufblähens kann nach einer zweckmäßigen Ausgestaltung der Erfindung noch dadurch verringert werden, daß die Teilschubkörper durch einen umgreifenden Metallring an ihrer gemeinsamen äußeren Oberfläche gestützt sind. Vorzugsweise weist der Metallring eine

./4

- 4 -

V-Querschnittsform mit nach innen gerichtetem stumpfen Winkel auf, wobei die Winkelspitze in der Höhe der Teilung der Schubkörper angeordnet ist.

Das Lager der Erfindung weist eine weiche vertikale Federrate augrund der praktisch in Reihe geschalteten Schubkörper auf.

Eine geringe dynamische Verhärtung und Geräuschübertragung bei großen Frequenzen wird erreicht.

Zu diesem Zweck kann es vorteilhaft sein, die hydraulisch wirksame Querschnittsfläche der Hauptkammer nur geringfügig größer als die der Trennwand zu halten. Hierdurch ist es möglich ein großflächiges Ventil einzubauen, dessen spezifisches Gewicht etwa gleich dem der Dämpfungsflüssigkeit ist, schwebend zwischen einer oberen und unteren Hubbegrenzung, das ergibt bei hochfrequenten Schwingungen mit keinen Amplituden nur geringe dynamische Verhärtung, weil Beschleunigungskräfte und Dämpfung vermieden werden. Nur bei Amplituden von einer vorbestimmten Größe an, verschließt das Ventil durch Anliegen auf den Hubbegrenzungsflächen die großflächige Öffnung, und Flüssigkeitsaustausch von einer Kammer in die andere kann nur noch durch den Drosselspalt zwischen Ventil und zentralem Bolzen erfolgen.

Zur Vereinfachung des Aufbaus des Lagers ist vorgeschlagen,

- 5 -

die gummielastischen Umfangswände und Trennwand einstückig auszubilden und mit den Stirnwänden zu verknüpfen,
und mit dem Widerlager zu verknüpfen oder zu vulkanisieren.
Dabei kann der einstückig aus den Umfangswänden und der
Trennwand gebildete Gummihohlkörper an nur einer Endseite
offen ausgebildet sein, wodurch eine wirtschaftliche Fertigung ermöglicht ist.

Weitere Einzelheiten und Vorteile des erfindungsgemäßen
Zweikammer-Motorlagers ergeben sich aus der nachfolgenden Beschreibung der zugehörigen Zeichnung, in der schematisch im Querschnitt Zweikammer-Motorlager der Erfindung mit zweigeteiltem Schubkörper der Hauptkammer
dargestellt sind. In der Zeichnung zeigt:

Fig. 1 eine Ausführungsform eines Zweikammer-
Motorlagers mit innenliegenden Anbindeflächen an
Metallteilen und
Fig. 2 eine andere Ausführungsform eines Zweikammer-Motorlagers mit außenliegenden Anbindeflächen.

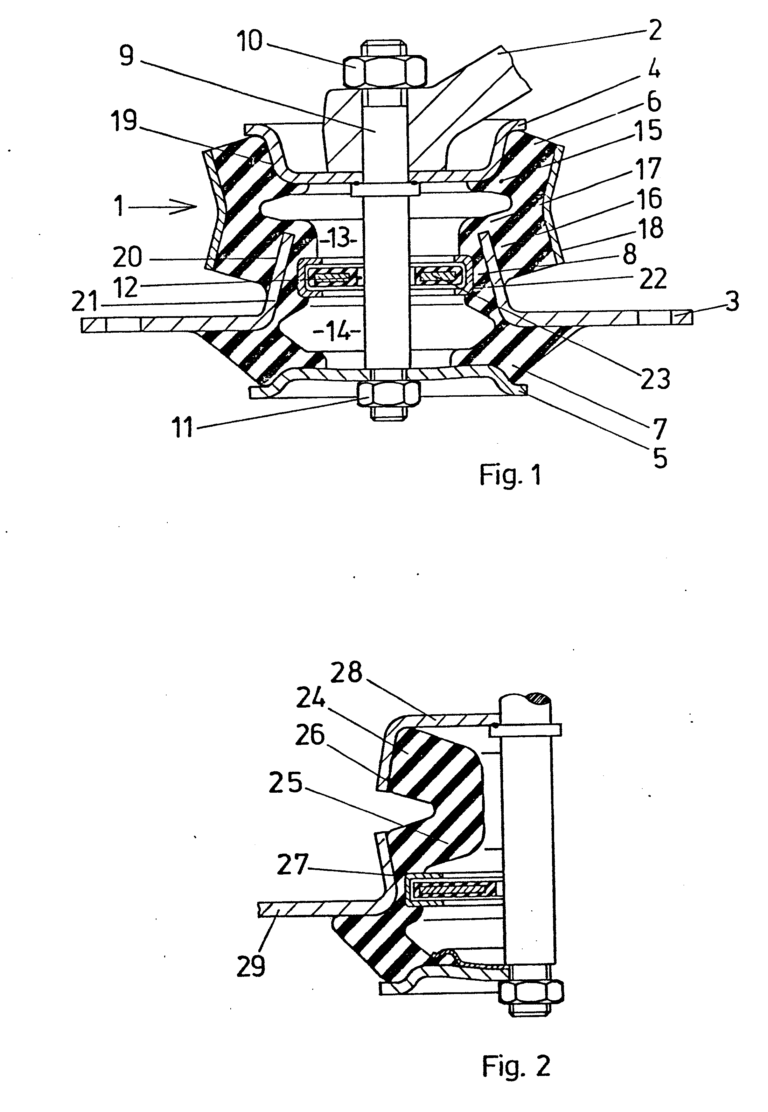

Das Motorlager 1 nach Fig. 1 stellt im Einbauzustand an einem
Kraftfahrzeug eine Verbindung zwischen dessen Verbrennungskraftmaschine und dessen Fahrgestell oder Rahmen her. Dies
ist in der Zeichnung schematisch durch einen Verbindungsarm
2 zum Motor und ein metallisches Widerlager 3 zum Rahmen
angedeutet. Das zwischen diesen beiden Befestigungsstellen angeordnete Motorlager 1 besteht aus einer motorseitigen metallischen Stirnwand 4, einer mit dieser starr verbundenen motorabgewandten metallischen Stirnwand 5, einer zwischen der motorseitigen Stirnwand 4 und dem metallischen Widerlager 3 angeordneten gummielastischen Umfangswand 6, einer zwischen der motorabgewandten Stirnwand 5 und dem Widerlager 3 verlaufenden gummielastischen Umfangswand 7 und einer an das Widerlager 3 angeschlossenen gemeinsamen gummielastischen Trennwand 8. Die Verbindung der beiden metallischen Stirnwände 4 und 5 miteinander erfolgt durch einen zentrisch das Lager durchgreifenden Bolzen 9, der mittels Schultern die starre Verbindung der Stirnwände 4 und 5 miteinander mittels aufschraubbaren Muttern 1o, 11 ermöglicht.

Durch die Stirnwände 4 und 5, die gummielastischen Umfangswände 6, 7 und die gemeinsame Trennwand 8 werden zwei Kammern gebildet, die mit einer Hydraulikflüssigkeit gefüllt sind und miteinander über eine Drosselöffnung 12 in der Trennwand 8 in Verbindung stehen. Die motorseitige Kammer ist als Hauptkammer 13 und die motorabgewandte Kammer als Nebenkammer 14 bezeichnet.

Die motorseitige gummielastische Umfangswand 6 besteht aus einem oberen Teilschubkörper 16, welche unter einem Winkel von etwa $30^\circ$ zueinander angeordnet sind, jeweils eine im wesentlichen quadratische Querschnittsform aufweisen, miteinander über ein Verbindungsstück 17 verbunden sind und mit innenliegenden kgelstumpfförmigen Anbindeflächen 19, 2o an der oberen Stirnwand 4 einerseits und dem Widerlager 3 andererseits verbunden sind.

Die beiden Teilschubkörper 15 und 16 werden von einem äußeren metallischen, im Querschnitt V-förmigen Stützring 18 umfaßt, dessen Schenkel im wesentlichen parallel zu äußeren Kegelmantelflächen 19 bzw. 2o der Stirnwand 4 bzw. des metallischen Widerlagers 3 verlaufen.

An die innere Kegelmantelfläche 21 des metallischen Widerlagers 3 ist die gummielastische Trennwand 8 angeschlossen, welche innenseitig mit einer Ringausnehmung 22 versehen ist, in die axial beweglich ein Ringkörper 23 eingesetzt ist, dessen innere Öffnung gemeinsam mit dem äußeren Umfang des Bolzens 9 die Drosselöffnung 12 des Zweikammer-Motorlagers 1 bildet.

Sämtliche gummielastischen Teile des Zweikammer-Motorlagers sind in der beschriebenen Ausführungsform einstückig ausgebildet, d.h. oberer Teilschubkörper 15, Verbindungsstücke 17, unterer Teilschubkörper 16, Trennwand 8 und die gummielastische Umfangswand 7 der Nebenkammer 14 stellen ein einziges Gummiteil dar, welches an zumeist kegelmantelförmigen Anbindungsflächen mit der metallischen Stirnwand 4, dem Stützring 18, dem metallischen Widerlager 3 und der metallischen Stirnwand 5 verbunden ist. Die Verbindung erfolgt nicht haftend, sondern als Klemmverbindung. In gleichwertiger Weise kann jedoch

- 8 -

auch ein Verkleben, Verspannen, Verknöpfen oder eine Verbindung durch Reibschluß zwischen den Gummiteilen und den Metallteilen hergestellt werden.

Durch die zwei übereinander angeordneten Teilschubkörper 15 und 16 der Hauptkammer 13, die kurz bauen, relativ weich gehalten werden können und schräg zueinander angeordnet sind, wird erreicht, daß das Motorlager 1 nicht nur bei niedrigen Frequenzen, sondern auch bei hohen eine gute Federrate ohne dynamische Verhärtung zeigt. Bei Frequenzen zwischen 1oo und 2oo Hz und Amplituden $\pm$ o,1 mm zeigt das Motorlager 1 aufgrund der vermiedenen dynamischen Verhärtung ein außerordentlich günstiges Geräuschverhalten. Schwingungen des Motorgehäuses mit niedriger Frequenz und großer Amplitude werden stark gedämpft, wobei die geringe radiale Erstreckung der beiden Teilschubkörper 15, 16 jegliches Aufblähen vermeidet und die erwünschte Pumpwirkung eintreten läßt.

Bei der in Fig. 2 der Zeichnung dargestellten Ausführungsform handelt es sich um eine Umkehrung der Ausbildungsform und Anordnung der zwei axial übereinander angeordneten Teilschubkörper 24, 25, deren Anbindeflächen 26, 27 an der oberen Stirnwand 28 einerseits und dem Widerlager 29 andererseits außen angeschlossen sind. Vorteilhaft ist bei dieser Ausführungsform die Vergrößerung des Pumpeffekts.

– 1 –

Patentansprüche:

1. Zweikammer–Motorlager mit hydraulischer Dämpfung, insbesondere für Kraftfahrzeuge, dessen flüssigkeitsgefüllte, hydraulisch über eine Drosselöffnung (12) miteinander verbundene Kammern (13, 14) aus einer gemeinsamen, an ein metallisches Widerlager (3) angeschlossenen Trennwand (8), je einer gummielastischen Umfangswand (6, 7) und starr miteinander verbundenen metallischen Stirnwänden (4, 5) bestehen, wobei die gummielastische Umfangswand (6 bzw. 7) mindestens einer Kammer (13 bzw. 14), insbesondere der Hauptkammer (13), als Schubfeder in Form eines Kegelstumpf-Hohlkörpers ausgebildet ist,
dadurch gekennzeichnet,
daß die als Schubfeder ausgebildete gummielastische Umfangswand (6) in zwei in axialer Richtung übereinander angeordnete Teilschubkörper (15, 16) unterteilt ist, welche im Querschnitt im wesentlichen viereckig und in einem Winkel zueinander einstückig verbunden sind, wobei der eine Teilschubkörper (15) mit einer Kegelmantelfläche (19) der metallischen Stirnwand (4) und der andere Teilschubkörper (16) mit einer Kegelmantelfläche (2o) des Widerlagers (3) verbunden ist.

2. Zweikammer–Motorlager nach Anspruch 1,
dadurch gekennzeichnet,
daß der von den Teilschubkörpern (15, 16) miteinander gebildete Winkel zwischen $20^{\circ}$ und $60^{\circ}$ beträgt.

3. Zweikammer-Motorlager nach Anspruch 1 und 2,
dadurch gekennzeichnet,
daß die beiden Teilschubkörper (24, 25) außen mit
Kegelmantelflächen an korrespondierenden Flächen
(26, 27) der Stirnwand (28) einerseits und des Widerlagers (29) andererseits angeschlossen sind.

4. Zweikammer-Motorlager nach Anspruch 1 und 2,
dadurch gekennzeichnet,
daß die Teilschubkörper (15, 16) durch einen umgreifenden Metallring (18) an ihrer gemeinsamen
äußeren Oberfläche gestützt sind.

5. Zweikammer-Motorlager nach Anspruch 4,
dadurch gekennzeichnet,
daß der Metallring (18) eine V-Querschnittsform mit
nach innen gerichtetem stumpfen Winkel aufweist,
dessen Winkelspitze in der Höhe der Teilung der
Schubkörper angeordnet ist.

6. Zweikammer-Motorlager nach einem der Ansprüche
1 bis 5,
dadurch gekennzeichnet,
daß die hydraulisch wirksame Querschnittsfläche der
Hauptkammer (13) nur geringfügig größer als die der
Trennwand (8) gehalten ist.

7. Zweikammer-Motorlager nach einem der Ansprüche
1 bis 6,

dadurch gekennzeichnet,

daß die gummielastischen Umfangswände (6, 7) und die Trennwand (8) einstückig ausgebildet und mit den Stirnwänden (4, 5) verknüft und mit dem Widerlager (3) verknüft oder vulkanisiert sind.

8. Zweikammer-Motorlager nach Anspruch 7, dadurch gekennzeichnet, daß der einstückig aus den Umfangswänden und der Trennwand gebildete Gummihohlkörper an nur einer Endseite offen ausgebildet ist.

Fig. 1

Fig. 2

| | | |
|---|---|---|
| **Europäisches Patentamt** | **EUROPÄISCHER RECHERCHENBERICHT** | Nummer der Anmeldung<br>EP 79 10 1273 |

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | DE - B - 1 067 263 (GENEST)<br>* Spalte 3, Zeile 53 bis Spalte 6, Zeile 41; Figuren 1-8 *<br>-- | 1,2 | B 60 K 5/12<br>F 16 F 15/04 |
| | GB - A - 1 096 319 (MOULTON)<br>* Seite 2, Zeile 102 bis Seite 4, Zeile 9; Figuren 1,2 *<br>-- | 1-3,7, 8 | |
| | GB - A - 1 148 515 (MOULTON)<br>* Seite 2, Zeilen 4-60; Figur *<br>-- | 1-3,7 | RECHERCHIERTE SACHGEBIETE (Int. Cl.²) |
| | DE - C - 945 899 (STUEBBE)<br>* Seite 2, Zeilen 21-87; Seite 3, Zeilen 6-54; Seite 3, Zeilen 102-126; Figuren 1,3 *<br>-- | 1 | B 60 K<br>F 16 F<br>F 16 M<br>B 60 G |
| | DE - A - 2 305 725 (WILMOT BREEDEN)<br>* Seite 4, Absatz 5 bis Seite 7, Absatz 1; Figur 1 *<br>-- | 1,3 | |
| | US - A - 2 562 195 (LEE)<br>* Spalte 4, Zeile 47 bis Spalte 10, Zeile 7; Figuren 1-7 *<br>-- | 1,4 | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze |
| | GB - A - 793 772 (MOULTON)<br>* Figur *<br>--<br>./. | 1,2,4 | E: kollidierende Anmeldung<br>D: in der Anmeldung angeführtes Dokument<br>L: aus andern Gründen angeführtes Dokument |
| Der vorliegende Recherchenbericht wurde für alle Patentansprüche erstellt. | | | &: Mitglied der gleichen Patentfamilie, übereinstimmendes Dokument |

| Recherchenort | Abschlußdatum der Recherche | Prüfer |
|---|---|---|
| Den Haag | 28-06-1979 | ESPEEL |

EPA form 1503.1  06.78

| | | Nummer der Anmeldung |
|---|---|---|
| Europäisches Patentamt | **EUROPÄISCHER RECHERCHENBERICHT** | **EP 79 10 1273** |

| **EINSCHLÄGIGE DOKUMENTE** | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | DE - A - 2 652 501 (PHOENIX) <br> * Insgesamt * <br><br> -- | 1,3,7 | |
| A | DE - A - 2 618 333 (BOGE) | 1 | |
| A | DE - A - 2 616 258 (AUDI NSU) | 1 | |
| A | DE - A - 2 410 813 (BMW) | 1 | |
| A | US - A - 2 380 899 (STRACHOVSKY) | 1 | RECHERCHIERTE SACHGEBIETE (Int. Cl.²) |
| | ---- | | |